# EUROPEAN PATENT SPECIFICATION

(11) **EP 1 976 411 B1**
(45) Date of publication and mention of the grant of the patent: **15.10.2014**
(21) Application number: 06829782.9
(22) Date of filing: 18.12.2006
(51) Int. Cl.: A46B 11/00

(54) **MICROFLUIDIC SURFACE TREATMENT DEVICE**
MIKROFLUIDISCHE OBERFLÄCHENBEHANDLUNGSVORRICHTUNG
DISPOSITIF DE TRAITEMENT DE SURFACE MICROFLUIDIQUE

(30) Priority: 29.12.2005 GB 0526560
(43) Date of publication of application: 08.10.2008
(73) Proprietor: Unilever PLC, London EC4Y 0DY (GB); Unilever N.V., 3013 AL Rotterdam (NL)
(72) Inventor: LIAN, Guoping, Bedfordshire MK44 1LQ (GB); TETRADIS-MAIRIS, Georgios, Bedfordshire MK44 1LQ (GB)
(74) Representative: Acham, Nicholas Clive
(86) International application number: PCT/EP2006/012324
(87) International publication number: WO 2007/073917

(56) References cited:
- WO-A-01/44667
- WO-A-2004/017785
- WO-A1-92/10146
- GB-A- 2 098 468
- US-A1- 2002 108 193
- US-A1- 2003 221 270
- US-A1- 2005 271 531
- US-A1- 2005 278 878
- US-B1- 6 203 320

## Description

The present invention relates to a microfluidic surface treatment device which delivers a precise quantity of at least one functional flowable compound.

WO 2004/017785 discloses a razor having microfluidic shaving aid delivery system.

In many fields of application a precise dosage of a functional flowable compound is important. The need for precision can have many reasons, for example it can be that the functional flowable compound is highly reactive and therefore should not be provided in dosages, which are too high; or it can be that the functional flowable compound should be added in a precise ratio to obtain a good result.

Furthermore it can be that the functional flowable compound is expensive so that the correct (that means efficient) dosage is desirable, because of cost reason.

Therefore the goal of the present invention is to provide a system, which allows a good, reproducible as well as variable dosage of a functional flowable compound.

Therefore the present invention relates to a device according to claim 1.

By term "head portion" we mean that part of the embodiment, where the functional flowable compound is leaving the device.

By the term "handle portion" we mean that part of the embodiment, where the embodiment is usually held by a user.

By term "microfluidic device" we mean a system comprising microchannels. Depending how many reservoirs are present the microfluidic device can comprise more than one microchannel, which can be independently from each other (from the reservoir to the outlet point) or the microfluidic device can have a cross section by which the functional flowable compounds are mixed.

By the term "microchannel" we mean channels with a hydraulic diameter below 1 mm.

By term "micro-pump" we mean a pump able to pump the functional flowable compound through the microchannel.

The present invention relates to a device, which is able to produce very precise and reproducible dosage of a functional flowable compound.

Furthermore the embodiment according to the present invention allows providing the functional flowable compound in a specific sequence. This can be relevant when more than one liquid is to be used.

The device is very suitable for applications wherein a small amount of one (or more) functional flowable compound is used. For example, when one functional flowable compound serves to start, to activate or to catalyse a reaction; and/or when the functional flowable compound is highly reactive.

The embodiment according to the present invention is also suitable to provide customized formulations to a user. The customisation can be realised either by using a specific designed , functional flowable compound, by the use of a specific designed container (reservoir) or by using a specific computer program, which controls the micro-pump system.

The present invention is a device, which comprises a head portion for contacting a surface, a handle portion, and at least one reservoir for containing a functional flowable compound which is connected via a conduit to the head portion; the conduit comprises at least one microfluidic device and at least one micro-pump and the micro-pump is (or the micro-pumps are) controlled by a computer program.

The computer program can control any parameter, which is related to the micro-pump, for example the flow rate, the total amount of dosing of the functional flowable compound, the sequence of dosing, the duration of the flow, etc.

Such a computer program is stored (saved) on a medium, which is incorporated into the device. A microprocessor, which is integrated into the device, is used as a control unit for the pumping system. Such a microprocessor stores the necessary computer program Suitable microprocessors are known in the prior art. Depending on the field of application of the device the kind of microprocessor can be adjusted, such as for example the physical size of the microprocessor as well as the capacity of the microprocessor.

As already said, the programming of the microprocessor can control the flow rate of the micro-pump, the duration of the pumping process, the sequence of the pumping steps. Additionally the microprocessor can also be used for controlling any other process, which is camed out by the device according to the present invention For example in case that the embodiment is an electronic toothbrush the microprocessor is also able to control the movements (vibration) of the brush In case that the device needs specific physical conditions, such as heating, cooling, pressure, etc. these could also be controlled by the microprocessor

It is possible to use more than microprocessor

The programming of the microprocessor can be influenced by an external interface. The interface serves to allow replacing or amending the programming of the microprocessor. Any commonly known interface can be used. The update (amending or replacing) of the programming can be done by using an external computer The update could be done according to commonly known methods, such as using CD-roms as well as using downloads from the internet.

As an alternative the device can comprise a microprocessor which can be re-programmed without using an external mean Such a device should have some kind of a mean by which it is possible to amend the programming.

As an alternative it is also possible to use a microprocessor, which can be replaced easily.

Due to the fact that the micropump is (or the micropumps are) controlled by a microprocessor, the functionality of the device can be easily adjusted to the need and/or desire of any user. Individual programming of the microprocessor allows it. It is possible to store more than one profile on a microprocessor, so that a group of people (for example a family) can use the device and every member can have an own stored profile.

Such a device is easy to handle and therefore consumer friendly.

Preferably, the device is a handhold device. That means a user is able to carry the device as such or at least able to carry or manipulate the device, which usually sliding on a surface (like a floor treating device). Examples are toothbrushes, razors, household cleaning devices (for cleaning tiles, windows, floors, etc.)

The micro-pump can be operated by an internal or external energy source. A combination of both is possible, too.

An internal energy source is usually one or more battery and/or one and more accumulator. Usually the batteries can be replaced easily. Depending on the kind of device the batteries can be the ones usually used in household devices (such as AA or AAA batteries) but also specific batteries used in industrial devices.

In case of an accumulator it is possible to use a removable accumulator or an accumulator which is an integral part of the embodiment. Therefore for charging, either the accumulator is charged (when removed) or the whole embodiment is put on a charging device.

Therefore a further embodiment of the present invention relates to a device as described above comprising an internal energy source.

A preferred embodiment of the present invention related to a device, which comprises at least one battery and/or at least one accumulator.

The device can also be operated by an external energy source, which is usually current from an outlet socket. It would as also be possible to use a generator, external batteries or accumulator or any other external energy source.

The embodiment can consist of one piece, which means that a user is not meant to remove any part of the embodiment.

Alternatively, the embodiment can consist of one or more removable parts. The advantage of having removable parts is that parts which have a short life span can be replaced independently.

In a preferred embodiment, the micropump and the microprocessor are in that part of the embodiment, which is meant to have a longer life span.

In general, replaceable parts are usually batteries and/or accumulators, the reservoirs (containers) for the functional flowable compounds, as well as the head portion (or parts of it), depending on the application of the device.

Preferred embodiments are devices wherein the head portion can be removed from the device.

Specifically when the embodiment is a toothbrush then also the head portion, which comprises the brush should be replaceable.

When the embodiment is a razor, then the head portion, which comprises the blade or blades should be replaceable or at least the blade or the blades should be replaceable It is obvious that the removable parts should be fixed to the device in a way that a user can remove them easily without destroying the device

It is possible to use commonly known fixing systems, which allows fixing and separating the parts without destroying the parts, or at least the part with the longer life span should stay intact. Such fixing systems can be screwing, dicking, as well as fixing by using an external mean.

A further embodiment of the present invention relates to a device, which comprises a removable head portion.

The embodiment can comprise one or more reservoir for containing a functional flowable compound The reservoir itself can comprise one kind of functional flowable compound The reservoir can also comprise more than one chamber, so that more than one functional flowable compound can be stored in one single reservoir

The functional flowable compound can be any compound which is liquid and which can be pumped through a micropump system Such a liquid usually has a viscosity of less than 60 mPas Preferably, the functional flowable compounds have a viscosity of less than 30, more preferably less than 20 mPas, very preferably less than 10 mPas The viscosity can be determined according to commonly known methods for example by using a Haake viscosimeter.

The functional flowable liquid can be or can contain for example a catalytic compound, an activator, a flavour compound or flavour formulation, a dye-stuff, toothpaste, shaving cream, an antimicrobial compound, UV absorber, etc.

In case that more than one functional flowable compound is used for a specific use, it is possible that the functional flowable compounds are not mixed before they are applied to the surface, which needs to be treated. That can be achieved by either that they are applied by two separated microchannels, or that they are applied by the same microchannel but in a sequence (one after the other)

It is also possible to mix the functional flowable compounds before they reach the surface This can be done by using a cross section in the microfluidic device system.

By varying the shape of the cross section it is also possible to create specific properties of the mixture. Of course the choice of the functional flowable compounds plays an important role as well.

The device (especially the cover of the device) according to present invention can be produced according to commonly known methods, such as molding, carving etc.

The embodiment can be made out of commonly known materials The choice of material depends on the use of the embodiment. The embodiment can comprise more than one material. Suitable materials are for examples any kind of polymeric material, plastics, gum, metals, fibre materials, glass fibres, wood, etc.

The choice of the material is usually directly related to the function of a part The cover of a device is often made out of a polymeric material, where as of course a microprocessor comprises silica material.

Therefore it is very common that the device is produced in parts and assembled at the end of the production process.

As said before, depending on the use of the embodiment it is very suitable and commonly known that the embodiment comprises parts, which can be removed and replaced Usually at least the head portion (or parts of the head portion) can be removed and replaced. In such a case the head portion must be fixed to the handle portion.

Therefore a further embodiment of the present invention is a device wherein the head portion can be removed.

Therefore a further embodiment of the present invention relates to a device wherein parts of the head portion can be removed.

In the case that the embodiment is a toothbrush, the head portion comprising the brush can be replaced in such a case the head portion must be fixed to the handle portion in a way that the parts can be separated easily by a user. This can be achieved by locking systems known in the prior art or by the locking system as described above

The tooth applicator device of the present invention is suitable for applying a functional oral treatment material to the teeth and/or gums. Preferably this is a tooth whitening agent however it could be another oral treatment such as a gum treatment agent, a teeth sensitivity agent or a tooth repair agent.

A reservoir in the device contains the functional flowable compound. This is fed to the head portion of the device via a micro conduit having a cross sectional area of less than 1mm², preferably less than 0.5 mm². The compound is pumped to the head by a micro-pump and therefore the dosing is highly accurate. The micro-pump is a pump which has a pumping capacity of less than 10ml/min and has a volume of less than 10 cc. Preferably the micro-pump has 1 linear dimension which is less than 5mm. This enables stacking for multiple reservoirs variants.

The reservoir can also contain more than one functional flowable compound in separated chambers.

When the reservoir is empty it can be replaced or it can be refilled.

The current legal maximum concentration of hydrogen peroxide in the United States is 6.7wt%. As a result there are many product which delivery just this amount in a controlled manner. However none of them have the convenience of a toothbrush. Most of them are applied by gum shield or teeth strips which are to be left on for a specified duration.

Additionally the embodiment of the present invention allows amending the dosage in case that new limit values are published. The present invention combines the convenience of a toothbrush with the effectiveness of a gum shield technique.

The functional flowable compound in the reservoir is fed to the head portion of the device via a microfluidic device. Although the invention is applicable to the presence of a single reservoir, it is particularly advantageous where there is a second or further reservoir. A particularly preferred embodiment is the presence of a reservoir containing a peroxide bleaching agent and a reservoir containing a catalyst. The invention allows the two reactive materials to be merged together in a Y-junction in the microfluidic device and thus do not have time to react together but instead emerge from the head of the applicator to perform their catalysed bleaching reaction on the teeth. Another ingredient combination is an alkaline solution of ClO₂ in one reservoir and an acidic solution in the other. When brought together these two streams produce a neutral stream which can deliver a whitening action and also an antimicrobial action.

But it is also possible to catalyse or activate the H₂O₂ by using a specially designed toothpaste.

The liquid or combination of liquids is fed to the head portion for delivery to the tooth surface in the mouth. This may be by a variety of methods, however it is envisaged that a manifold will be a typical way of achieving this. A plurality of hollow fibres will protrude from the head to deliver the treatment. They will be surrounded by toothbrush fibres to protect them from physical harm. Preferably such hollow fibres have an internal diameter of from 100 to 1000 micrometers, preferably from 200 to 700 micrometres.

A preferred embodiment of the present invention relates to a device which is a toothbrush. Using a device as described in the present patent application bleaching of teeth is simplified.

Bleaching is the most effective method of whitening teeth. The bleaching compound works by oxidising coloured unsaturated compounds into carboxylic adds and alcohols. However, because of their nature, legal limits are imposed on their use. Thus many commercial bleaching products attempt to work up to the maximum limit and then accurate dosing becomes critical. Without accurate dosing any device would have to operate well dear of any legal limits and thus reduce their effectiveness.

The accuracy of dosing which microfluidic technology permits the dosing of bleaching compounds are closer to the legal maximum than was previously possible.

Preferred bleaching compound are hydrogen peroxide, sodium percarbonate peroxide and carbamide peroxide.

These bleaching materials need to be left in contact with the teeth for a few minutes.

It is highly preferred that the bleaching is enhanced by the presence of a catalyst

For peroxide bleaching to be most effective it needs to left on the teeth for up to 30 minutes. This may be impractical for an applicator device. Therefore it is preferred that the device also delivers a catalyst which accelerates the whitening process.

One preferred catalyst is the iodide ion, which may be provided for example by potassium iodide. The addition of the iodide to a peroxide in a basic medium yields free radical oxygen and water, generating large amounts of heat and depleting the hydrogen peroxide in a matter of minutes. The free radical oxygen generated in this reaction can be utilised to oxidise the organic molecules responsible for staining which causes them to become colourless and soluble in water. The iodide ion is therefore a convenient method of providing potent bleaching without the need for external energy supply such as light, lasers, heat sources etc.

Another possible combination is bleaching agent and peracid. This unstable combination gives excellent whitening when used in the device according to the present invention.

The fast catalytic reaction is part of the reason why so-called whitening toothpastes are less effective than separate applicator techniques. The present invention permits the use of a catalyst to give much greater whitening effect but also with the convenience of a toothbrush applicator.

The invention will now be illustrated with reference to the following drawings in which:

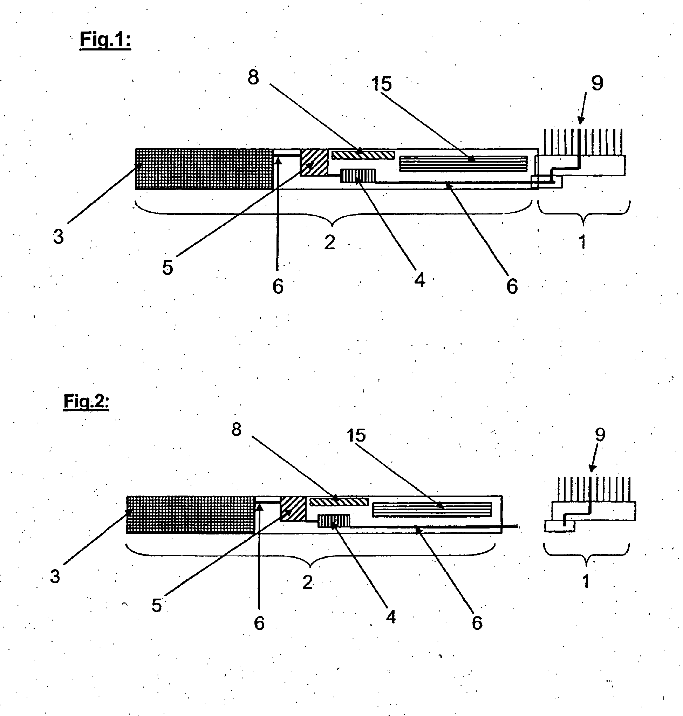

- **Fig. 1:**: is a side view of a device according to the invention. It shows a device having a head portion (1) and a handle portion (2). The device comprises a reservoir (3) comprising a functional flowable liquid, which can be pumped out by a micro-pump (5) into a microfluidic device (4). The functional flowable liquid then travel through a fine capillary (microchannel) (6), where it enters a manifold in the head portion and where is distributed into different capillary tubes aligned with the fibres (Delivery point (9) in the head portion. In use the user controls the device from a control panel which is connected to the electronics board (8) which controls the micro-pump (5) and optionally a micomechanic part (15), which can create effect, which can be useful for a specific use (such vibration, changing temperature etc.). The head portion can either be removable (replaceable) or non-removable.
- **Fig. 2:**: Is showing is a side view of a device according to the invention, wherein the head portion (1) is removed from the handle portion (2). Each part is the same as in Fig.1.

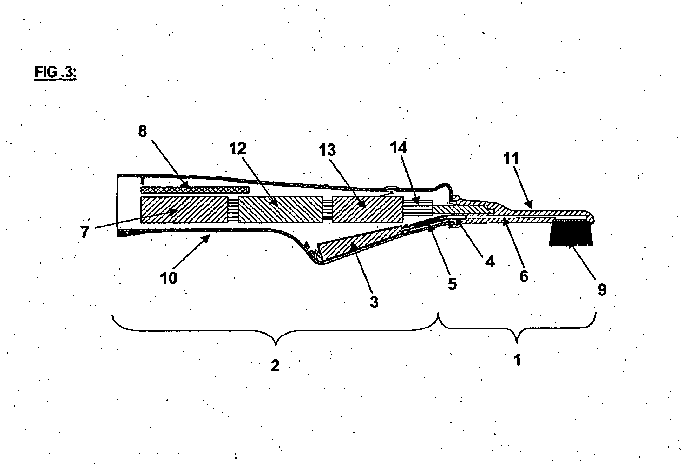

- **Fig. 3:**: shows a conventional electric toothbrush which has been modified to deliver a precisely controlled quantity of whitening peroxide compound. It shows a toothbrush having a head portion (1) and a handle portion (2). The toothbrush comprises also a battery (7), which powers a motor (12), which rotates a shaft which enters a gearbox (13). The output from the gearbox inters an agitator mechanism (14) which can add translational movement to the rotational movement The movement generated is translated to the chassis of head portion (11) which cleans the teeth. The user grips the toothbrush by the chassis of the handle portion (10). In addition, the toothbrush contain a reservoir (3) holding liquid peroxide bleaching compound, which can be pumped out by a micro-pump (5) into a microfluidic device (4). The peroxide bleach then travel through a fine capillary (6), where it enters a manifold in the head and the peroxide is distributed into different capillary tubes aligned with the fibres (Delivery point (9) in the toothbrush head, terminating a millimetre or so before the tooth brush fibres. In use the user controls the application of bleach from a control panel which is connected to the electronics board (8) which controls the micro-pump (5) and the motor (7).

## Claims

1. Device comprising
a head portion (1) for contacting a surface,
a handle portion (2), and
at least one reservoir (3) for containing a functional flowable compound, which is connected via a conduit to the head portion (1),
the conduit comprises a at least one microfluidic device (4) comprising channels with a hydraulic diameter below 1 mm and at least one micro-pump (5), **characterised in that** the head portion comprises a plurality of hollow fibres protruding from the head portion to deliver the functional flowable compound, the plurality of hollow fibres being surrounded by toothbrush fibres to protect them from physical harm; wherein the device further comprises at least one microprocessor enabling the at least one micro-pump to be controlled by a computer program.

2. A device according to any of the preceding claims, wherein the device comprises at least one external interface.

3. A device according to any of the preceding claims, wherein the device is a handhold device.

4. A device according to any of the preceding claims, wherein the device comprises an internal and/or external energy source.

5. A device according to any of the preceding claims, wherein the device comprises at least one battery (7) and/or at least one accumulator.

6. A device according to any of the preceding claims, wherein the device comprises at least one removable or replaceable part.

7. A device according to claim 6, wherein the removable or replaceable parts are batteries and/or accumulators, the containers for the functional flowable liquid, as well as the head portion or parts of it.

8. A device according to claim 6, wherein the removable or replaceable is the head portion (1) and/or parts of the head portion (1).

9. A device according to any of the preceding claim, which is a toothbrush, an electric toothbrush, a razor, an electric razor or a household cleaning device.

## Patentansprüche

1. Vorrichtung, die umfasst:
einen Kopfabschnitt (1) zum Berühren einer Oberfläche,
einen Griffabschnitt (2) und
mindestens einen Behälter (3), um eine funktionale fließfähige Zusammensetzung zu enthalten, der über eine Leitung mit dem Kopfabschnitt (1) verbunden ist,
wobei die Leitung mindestens eine mikrofluidische Vorrichtung (4) umfasst, die Kanäle mit einem hydraulischen Durchmesser von unter 1 mm und mindestens eine Mikropumpe (5) umfasst,
**dadurch gekennzeichnet, dass** der Kopfabschnitt mehrere hohle Fasern umfasst, die von dem Kopfabschnitt vorstehen, um die funktionale fließfähige Zusammensetzung zu liefern, wobei die mehreren hohlen Fasern von Zahnbürstenfasern umgeben sind, um sie vor physischem Schaden zu schützen; wobei die Vorrichtung ferner mindestens einen Mikroprozessor umfasst, der die mindestens eine durch ein Computerprogramm zu steuernde Mikropumpe aktiviert.

2. Vorrichtung nach einem der vorhergehenden Ansprüche, wobei die Vorrichtung mindestens eine externe Schnittstelle umfasst.

3. Vorrichtung nach einem der vorhergehenden Ansprüche, wobei die Vorrichtung eine tragbare Vorrichtung ist.

4. Vorrichtung nach einem der vorhergehenden Ansprüche, wobei die Vorrichtung eine interne und/oder externe Energiequelle umfasst.

5. Vorrichtung nach einem der vorhergehenden Ansprüche, wobei die Vorrichtung mindestens eine Batterie (7) und/oder mindestens einen Akkumulator umfasst.

6. Vorrichtung nach einem der vorhergehenden Ansprüche, wobei die Vorrichtung mindestens einen entfernbaren oder austauschbaren Teil umfasst.

7. Vorrichtung nach Anspruch 6, wobei die entfernbaren oder austauschbaren Teile Batterien und/oder Akkumulatoren, die Behälter für die funktionale fließfähige Flüssigkeit sowie der Kopfteil oder Teile davon sind.

8. Vorrichtung nach Anspruch 6, wobei der entfernbare oder austauschbare Teil der Kopfabschnitt (1) und/oder Teile des Kopfabschnitts (1) sind.

9. Vorrichtung nach einem der vorhergehenden Ansprüche, die eine Zahnbürste, eine elektrische Zahnbürste, ein Rasierer, ein elektrischer Rasierer oder eine Haushaltsreinigungsvorrichtung ist.

## Revendications

1. Dispositif comportant
une partie de tête (1) destinée à venir en contact avec une surface,
une partie de poignée (2), et
au moins un réservoir (3) destiné à contenir un composé fonctionnel pouvant s'écouler, qui est relié par l'intermédiaire d'un conduit à la partie de tête (1),
le conduit comporte au moins un dispositif micro-fluidique (4) comportant des canaux avec un diamètre hydraulique en-dessous de 1mm et au moins une micro-pompe (5), **caractérisé en ce que** la partie de tête comporte une pluralité de fibres creuses dépassant de la partie de tête afin de délivrer le composé fonctionnel pouvant s'écouler, la pluralité de fibres creuses étant entourée par des fibres de brosse à dents afin de les protéger contre un endommagement physique ; le dispositif comportant en outre au moins un microprocesseur permettant à la au moins une micro-pompe d'être commandée par un programme informatique.

2. Dispositif selon l'une quelconque des revendications précédentes, dans lequel le dispositif comporte au moins une interface externe.

3. Dispositif selon l'une quelconque des revendications précédentes, dans lequel le dispositif est un dispositif tenu à la main.

4. Dispositif selon l'une quelconque des revendications précédentes, dans lequel le dispositif comporte une source d'énergie interne et/ou externe.

5. Dispositif selon l'une quelconque des revendications précédentes, dans lequel le dispositif comporte au moins une batterie (7) et/ou au moins un accumulateur.

6. Dispositif selon l'une quelconque des revendications précédentes, dans lequel le dispositif comporte au moins une partie amovible ou remplaçable.

7. Dispositif selon la revendication 6, dans lequel les parties amovibles ou remplaçables sont des batteries et/ou des accumulateurs, les réservoirs pour le liquide fonctionnel pouvant s'écouler, ainsi que la partie de tête ou des parties de celle-ci.

8. Dispositif selon la revendication 6, dans lequel la partie amovible ou remplaçable est la partie de tête (1) et/ou des parties de la partie de tête (1).

9. Dispositif selon l'une quelconque des revendications précédentes, qui est une brosse à dents, une brosse à dents électrique, un rasoir, un rasoir électrique ou un dispositif de nettoyage ménager.
